# EUROPÄISCHE PATENTSCHRIFT

(11) **EP 3 124 433 B1**
(45) Veröffentlichungstag und Bekanntmachung des Hinweises auf die Patenterteilung: **01.09.2021**
(21) Anmeldenummer: 15400033.5
(22) Anmeldetag: 27.07.2015
(51) Int. Cl.: C01B 3/50

(54) **VERFAHREN ZUR KÜHLUNG VON SYNTHESEGAS**
METHOD FOR COOLING SYNTHESIS GAS
PROCÉDÉ DE REFROIDISSEMENT DE GAZ DE SYNTHÈSE

(43) Veröffentlichungstag der Anmeldung: 01.02.2017
(73) Patentinhaber: L'Air Liquide Société Anonyme pour l'Etude et l'Exploitation des Procédés Georges Claude, 75007 Paris (FR)
(72) Erfinder: Tadiello, Jean-Philippe, D-60431 Frankfurt am Main (DE); Chen, Yue, D-60326 Frankfurt am Main (DE)
(74) Vertreter: Dropsch, Holger

(56) Entgegenhaltungen:
- WO-A1-2014/091098
- US-A- 3 442 613
- US-A- 4 296 085
- Klaus Sattler ET AL: "Distillation and Partial Condensation" In: "Thermal Separation Processes: Principles and Design", 1. Januar 1995 (1995-01-01), VCH Verlagsgesellschaft mbH, XP055064733, Seiten 101-237, DOI: 10.1002/9783527615476.ch2, * Seite 230 - Seite 232; Abbildungen 2-85, 2-86 *
- None

## Beschreibung

### Gebiet der Erfindung

Die Erfindung betrifft weiterhin ein Verfahren gemäß Anspruch 1.

### Stand der Technik

Anlagen und Verfahren zur Abkühlung von bei erhöhter Temperatur erzeugtem wasserstoffhaltigem Synthesegas sind bekannt. Ein häufig angewandtes Verfahren ist die sogenannte katalytischer Dampfreformierung eines kohlenwasserstoffhaltigen Einsatzgases, die beispielsweise in Ullmanns Encyclopedia of Industrial Chemistry, Sixth Edition, Vol. 15, Gas Production, Chapter 2. Beschrieben ist. Die Einsatzgase, ein kohlenwasserstoffhaltiges Gas, wie z. B. Erdgas und Wasserdampf werden dabei bei erhöhtem Druck, z. B. bei 20 bis 35 bar, und hoher Temperatur, z. B. 800 bis 950 °C, durch von außen beheizte, mit Katalysator gefüllte Reaktorrohre geleitet. Dabei werden die Einsatzgase in Wasserstoff- und kohlenmonoxidreiches Synthesegas umgewandelt. Ein derartiger Reaktor wird häufig als SMR und das Verfahren als SMR-Verfahren bezeichnet, abgekürzt für Steam-Methane-Reformer. Für die Wirtschaftlichkeit des Verfahrens ist es sehr wichtig, die für die Aufheizung der Einsatzgase und die Durchführung der, in der Summe, endothermen Reformierungsreaktionen aufgewendete Heizenergie möglichst weitgehend bei der Abkühlung des erzeugten Synthesegases zur Aufheizung der kohlenwasserstoffhaltigen Einsatzgase und zur Dampferzeugung zu verwenden.

Direkt nachdem das erzeugte Synthesegas den SMR verlassen hat, wird es in einem ersten Wärmeaustauschschritt mit Kesselspeisewasser abgekühlt. Das Kesselspeisewasser wird dabei verdampft. Der Dampf wird als Einsatzdampf für das SMR-Verfahren verwendet und überschüssiger Dampf wird als sogenannter Exportdampf zur Verwendung außerhalb des SMR-Verfahrens ausgeleitet. Wenn als Endprodukt des SMR-Verfahrens ein ausschließlich aus Wasserstoff bestehendes Synthesegas erzeugt werden soll, dann wird das Synthesegas anschließend in einer Anlage zur katalytischen Konvertierung behandelt, in der das Kohlenmonoxid mit Wasserdampf in Wasserstoff und Kohlendioxid umgewandelt wird. Diese Konvertierung ist im oben erwähnten Ullmann-Band auf Seite 382 ff. beschrieben.

Die die Erfindung betreffende Verfahren betrifft die sich an die bisher beschriebenen Schritte anschließende, weitere Abkühlung des Synthesegases. Dabei wird das Synthesegas zunächst durch Wärmeaustausch mit dem kohlenwasserstoffhaltigen Einsatzgas weiter abgekühlt. Anschließend erfolgt eine weitere Abkühlung durch Wärmeaustausch mit entgastem Kesselspeisewasser, das anschließend dem Verdampfer zugeführt wird, dann durch Beheizung der Kesselspeisewasserentgasungsanlage und zur Vorheizung des frischen Kesselspeisewassers, vor dessen Einleitung in die Entgasungsanlage. Die Entgasung erfolgt rein physikalisch durch Erwärmung des Kesselspeisewassers. Daran anschließend kann das Synthesegas optional durch einen Luftkühler und dann durch einen mit Kühlwasser betriebenen Kühler bis nahezu auf Umgebungstemperatur abgekühlt werden. Dann wird in einem Kondensatabscheider das in den vorangegangenen Abkühlungsstufen gebildete Kondensat aus dem Synthesegas abgetrennt und das Synthesegas zur weiteren Behandlung geleitet. Das Kondensat wird verfahrensintern zur Dampferzeugung verwendet. Nachteilig an diesem technischen Konzept ist, dass zur Kondensatabscheidung ein besonderer, kostenverursachender Apparat, nämlich der Kondensatabscheider benötigt wird.

In der europäischen Patentanmeldung EP 1 813 572 A2 wird eine derartige Anlage beschrieben. In dieser Schrift wird dabei vorgeschlagen, die Anlage und das Verfahren so zu gestalten, dass zahlreiche der Wärmetauscher in einem gemeinsamen, von dem abzukühlenden Synthesegas durchströmten Gehäuse untergebracht sind und wobei die Wärmetauscher, zumindest zum Teil, parallel im Gehäuse installiert sind, sodass sie vom gleichen Gasstrom umströmt werden. Nachteilig an dieser Anordnung ist, dass die Wärmetauscher nicht in temperaturmäßig abgestufter Reihenfolge mit von Wärmetauscher zu Wärmetauscher kälter werdendem Synthesegas beaufschlagt werden. Die optimale Auslegung und der Betrieb der Wärmetauscher zur Übertragung der jeweils angestrebten bzw. erforderlichen Wärmemenge wird dadurch erschwert.

US 4296085 offenbart ein Verfahren und die entsprechende Vorrichtung zur Synthesegas und Ammoniak - Erzeugung. Synthesegas wird in einem Reformer erzeugt und in einen Gaskühler mit Speisewasser gekühlt. US 4296085 offenbart einen Entfeuchter (Dehumidifer) zur Entfeuchtung des aus dem Shiftreaktor kommenden Synthesegases.

Aufgabe der Erfindung ist es, ein Verfahren zur Verfügung zu stellen, dass die Nachteile des Stands der Technik überwindet.

### Beschreibung der Erfindung

Die Aufgabe wird im Wesentlichen durch ein erfindungsgemäßes Verfahren mit den Merkmalen des Anspruchs 1 gelöst.

Es ist offenbart eine Anlage zur Abkühlung eines wasserstoffhaltigen Synthesegases, das durch Wärmeaustausch mit Kesselspeisewasser zu dessen Umwandlung in Dampf abgekühlt wurde, wobei das dabei entstandene wässrige Kondensat abgetrennt wurde, wobei die Anlage zur weiteren Abkühlung des Gases mehrere, hintereinandergeschaltete Gaskühler umfasst, die der weiteren Abkühlung des Synthesegases jeweils durch Wärmeaustausch mit dem Einsatzgas oder mit Kesselspeisewasser dienen, dadurch gekennzeichnet, dass mindestens einer der Gaskühler einen senkrecht stehenden Behälter mit mindestens einem im oberen Bereich des Behälters installierten Dephlegmator umfasst, die so im Behälter angeordnet sind, dass sie von der Gasströmung nicht umgangen werden können, wobei der Gaskühler weiterhin einen im unteren Bereich des Behälters gelegenen Sumpfraum, eine zwischen Sumpfraum und dem oder den Dephlegmatoren gelegene Eintrittsöffnung im Behältermantel für den Eintritt des Gasstroms, eine an der tiefsten Stelle des Sumpfraums gelegene Öffnung für den Austritt der im Sumpfraum gesammelten Flüssigkeit und eine oberhalb der Dephlegmatoren gelegene Öffnung für den Austritt des Gasstroms umfasst.

### Erfindungsgemäßes Verfahren:

Verfahren zur Abkühlung eines wasserstoffhaltigen Synthesegases, das durch Wärmeaustausch mit Kesselspeisewasser zu dessen Umwandlung in Dampf abgekühlt wurde, wobei das dabei entstandene wässrige Kondensat abgetrennt wurde, wobei das Verfahren folgende Schritte umfasst:
a) Abkühlung durch Wärmeaustausch mit entgastem Kesselspeisewasser,
b) Abkühlung durch Wärmeaustausch mit Kesselspeisewasser bei dessen Entgasung,
c) Abkühlung des Gases und Abtrennung des im Gas befindlichen Kondensats mittels eines Gaskühlers, der einen senkrecht stehenden Behälter mit mindestens einem, im oberen Bereich des Behälters installierten Dephlegmator umfasst, der oder die so im Behälter angeordnet ist, dass sie von der Gasströmung nicht umgangen werden können, wobei der Gaskühler weiterhin einen im unteren Bereich des Behälters gelegenen Sumpfraum, eine zwischen Sumpfraum und Dephlegmator(en) gelegene Eintrittsöffnung im Behältermantel für den Eintritt des Gasstroms, eine an der tiefsten Stelle des Sumpfraums gelegene Öffnung für den Austritt der im Sumpfraum gesammelten Flüssigkeit und eine oberhalb des oder der Dephlegmatoren gelegene Öffnung für den Austritt des Gasstroms umfasst, und wobei das Synthesegas in den Gaskühler eingeleitet wird, durch den oder die Dephlegmatoren strömt und den Gaskühler durch die Gasaustrittsöffnung, zur weiteren Behandlung außerhalb des Verfahrens, verlässt, wobei der Wärmeaustausch im Dephlegmator jeweils gegen nicht entgastes Kesselspeisewasser und/oder Kühlwasser erfolgt und wobei das beim Durchströmen des Gaskühlers aus dem Gas abgetrennte Kondensat sich im Sumpfraum des Gaskühlers sammelt, aus dem Sumpfraum ausgeleitet und zur Verwendung als Kesselspeisewasser der Entgasung zugeführt wird.

Durch die Anordnung mindestens eines der für die Abkühlung des Synthesegases benötigten Wärmetauscher als Dephlegmator in einem Behälter, der als Kondensatabscheider wirkt, wird ein gesonderter Kondensatabscheider, und damit Kosten und Platzbedarf, eingespart.

Dadurch, dass der oder die Dephlegmatoren in dem auch als Kondensatabscheider wirkenden Behälter so eingebaut werden, dass sie jeweils vom Synthesegasstrom nicht umgangen werden können, sind eindeutige Auslegungsbedingungen für den oder die Dephlegmatoren gegeben, da der Synthesegasstrom so nicht mehrere Dephlegmatoren parallel durchströmt, sondern gezwungen ist, sie nacheinander zu durchströmen.

### Bevorzugte Ausgestaltungen der Erfindung

Eine bevorzugte Ausgestaltung der Erfindung ist dadurch gekennzeichnet, dass der Dephlegmator einen Rohrbündelwärmetauscher oder einen Plattenwärmetauscher umfasst. Im Falle eines Rohrbündelwärmetauschers wird dieser bei der Erfindung vorzugsweise so eingesetzt, dass das zu Kühlung verwendete Medium, z. B. Kesselspeisewasser oder Kühlwasser, innerhalb der Rohre fliest. Der Vorteil von Rohrbündelwärmetauschern liegt hauptsächlich darin, dass für ihre Auslegung und Herstellung sehr viele Erfahrungen vorliegen, sodass ihre Anwendung sehr zuverlässig und kostengünstig ist.

Plattenwärmetauscher werden im vorliegenden Fall bevorzugt so eingesetzt, dass das Kühlmedium, z. B. Wasser, innerhalb der Platten fließt. Plattenwärmetauscher haben den Vorteil, dass auch für ihre Anwendung viele Erfahrungen vorliegen und dass sie einfach zu reinigen sind.

Eine weitere bevorzugte Ausgestaltung der Erfindung ist dadurch gekennzeichnet, dass der Gaskühler mehr als einen Dephlegmator umfasst, wobei diese übereinander angeordnet sind, sodass sie nacheinander von dem Synthesegas durchströmt werden. Auf diese Weise werden mehrere Abkühlungsstufen für das Synthesegas in einem Apparat untergebracht. Dies führt zur Einsparung von Kosten und zur Verringerung des Platzbedarfs.

Durch den Dephlegmator erfolgt der Wärmeaustausch mit Kesselspeisewasser und/oder Kühlwasser. Die Verwendung von Kesselspeisewasser hat den Vorteil, dass es dabei erwärmt wird und somit die dem Synthesegas entzogene Wärme dem Verfahren zur Erzeugung des Synthesegase nicht verloren geht.

Die Verwendung von Kühlwasser hat den Vorteil, dass es sich dabei um ein Hilfsmedium und nicht um ein Prozessmedium, handelt. Damit kann der Wärmaustausch und der verwendete Dephlegmator optimiert für die Abkühlung des Synthesegases ausgelegt werden, ohne dass dabei Rücksicht auf die sonstigen Belange des Verfahrens zur Synthesegaserzeugung genommen werden muss. Es ist auch offenbart eine Anlage die weiterhin einen Wärmetauscher zur Kühlung des Synthesegases mit Umgebungsluft umfasst. Hierdurch kann die mit Kesselspeisewasser und/oder Kühlwasser erfolgte Kühlung ergänzt werden. Luftkühlung hat den Vorteil, dass kein Anlagensystem zur Versorgung des Kühlers mit Kühlmedium benötigt wird.

Eine besondere Ausgestaltung des erfindungsgemäßen Verfahrens ist dadurch gekennzeichnet, dass das wasserstoffhaltige Synthesegas durch katalytische Dampfreformierung eines kohlenwasserstoffhaltigen Einsatzgases erzeugt wurde und dass vor der Abkühlung durch Wärmeaustausch mit entgastem Kesselspeisewasser eine Abkühlung durch Wärmeaustausch mit dem kohlenwasserstoffhaltigen Einsatzgas erfolgt.

Für die Wirtschaftlichkeit des Dampfreformierungsverfahrens ist es sehr wichtig, dass die Umwandlung von Kesselspeisewasser in den für die Reformierung benötigten Dampf mit möglichst geringem apparativen und energetischen Aufwand erfolgt. Mit dem vorliegenden erfindungsgemäßen Verfahren sind diese Bedingungen gegeben.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

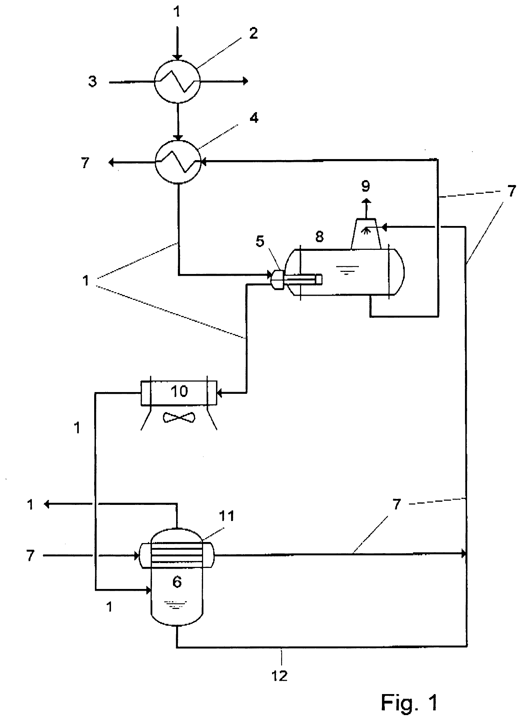

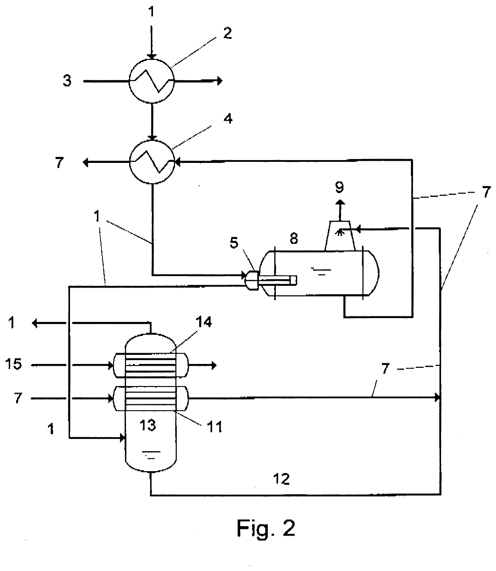

Das erfindungsgemäße Verfahren soll im Folgenden anhand der Zeichnungen Fig. 1 und 2 erläutert werden. Dabei zeigen:
- Fig. 1: ein Fließbild einer beispielhaften Ausführung einer Anlage, mit einem mit einem Dephlegmator ausgestatteten Gaskühler,
- Fig. 2: ein Fließbild einer beispielhaften Ausführung einer Anlage, mit einem mit zwei Dephlegmatoren ausgestatteten Gaskühler.

### Fig.1:

Das Synthesegas 1 ist durch Wärmeaustausch und Verdampfung von Kesselspeisewasser zu Einsatzdampf und Exportdampf (bildlich in Fig. 1 nicht dargestellt) auf eine Temperatur von 360 °C abgekühlt und wird in Wärmetauscher 2 eingeleitet. Dort gibt es Wärme an den Erdgasstrom 3 ab, der als Einsatzgas der Dampfreformierung (bildlich nicht dargestellt) zugeleitet wird. Das Synthesegas 1 wird dann durch die Wärmetauscher 4 und 5, sowie den Gaskühler 6 geleitet und erwärmt dadurch aus Frischwasser erzeugtes Kesselspeisewasser 7. Das Kesselspeisewasser 7 wird zunächst als Kühlmedium im Dephlegmator 11 des Gaskühlers 6 verwendet und Wärmetausch mit dem Synthesegas 1 erwärmt. Dann wird es im Entgaser 8 physikalisch, d. h. durch Erwärmen entgast. Die ausgetriebenen Gase 9 werden aus dem Entgaser 8 ausgeleitet und der weiteren Behandlung (bildlich nicht dargestellt) zugeführt. Nachdem das entgaste Kesselspeisewasser 7 in Wärmetauscher 4 weiter aufgeheizt wurde, wird es der Verdampfung (bildlich nicht dargestellt) zugeführt, wobei es zu Einsatzdampf für die Dampfreformierung umgewandelt wird. Vom Wärmetauscher 4 wird das Synthesegas 1 dem Luftkühler 10 zugeleitet, in dem es durch Wärmeabgabe an die Umgebungsluft weiter abgekühlt wird. Das Synthesegas 1 wird im Gaskühler 6 bis auf nahe Umgebungstemperatur abgekühlt und zur weiteren Behandlung aus der Anlage ausgeleitet. Das aus dem Synthesegas 1 im Gaskühler 6 abgeschiedene Kondensat 12 wird mit dem Kesselspeisewasser 7 beigemischt.

### Fig. 2

In dem in Fig. 2 gezeigte Anlage wurde der in Fig. 1 gezeigte Luftkühler 10 durch einen zweiten, im Gaskühler 13 installierten Dephlegmator 14 ersetzt. Die Dephlegmatoren 11 und 14 sind so im Gaskühler 13 installiert, dass das Synthesegas 1 sie nacheinander durchströmt. Der Dephlegmator 14 wird mit Kühlwasser 15 betrieben, das im Kreislauf, z. B. über einen Kühlturm (bildlich nicht dargestellt) gefahren wird.

### Gewerbliche Anwendbarkelt

Die Erfindung stellt eine Alternative und Verbesserung der gewerblich bereits angewandten Verfahren dar. Die Verbesserung besteht in der Zusammenfassung von Wärmetauscher bzw. Wärmetauschern und Kondensatabscheider in einem Apparat und der Anordnung der Wärmetauscher, hier als Dephlegmatoren bezeichnet, im Apparat, so dass das Synthesegas gezwungen ist, diese nacheinander zu durchströmen.

### Bezugszeichenliste

- 1: Synthesegas
- 2: Wärmetauscher
- 3: Erdgasstrom
- 4: Wärmetauscher
- 5: Wärmetauscher
- 6: Gaskühler
- 7: Kesselspeisewasser
- 8: Entgaser
- 9: Ausgetriebene Gase
- 10: Luftkühler
- 11: Dephlegmator
- 12: Kondensat
- 13: Gaskühler
- 14: Dephlegmator
- 15: Kühlwasser

## Patentansprüche

1. Verfahren zur Abkühlung eines wasserstoffhaltigen Synthesegases, das durch Wärmeaustausch mit Kesselspeisewasser zu dessen Umwandlung in Dampf abgekühlt wurde, wobei das dabei entstandene wässrige Kondensat abgetrennt wurde, wobei das Verfahren folgende Schritte umfasst:
a) Abkühlung durch Wärmeaustausch mit entgastem Kesselspeisewasser,
b) Abkühlung durch Wärmeaustausch mit Kesselspeisewasser bei dessen Entgasung,
c) Abkühlung des Gases und Abtrennung des im Gas befindlichen Kondensats mittels eines Gaskühlers, der einen senkrecht stehenden Behälter mit mindestens einem, im oberen Bereich des Behälters installierten Dephlegmator umfasst, der oder die so im Behälter angeordnet ist, dass sie von der Gasströmung nicht umgangen werden können, wobei der Gaskühler weiterhin einen im unteren Bereich des Behälters gelegenen Sumpfraum, eine zwischen Sumpfraum und Dephlegmator(en) gelegene Eintrittsöffnung im Behältermantel für den Eintritt des Gasstroms, eine an der tiefsten Stelle des Sumpfraums gelegene Öffnung für den Austritt der im Sumpfraum gesammelten Flüssigkeit und eine oberhalb des oder der Dephlegmatoren gelegene Öffnung für den Austritt des Gasstroms umfasst, und wobei das Synthesegas in den Gaskühler eingeleitet wird, durch den oder die Dephlegmatoren strömt und den Gaskühler durch die Gasaustrittsöffnung, zur weiteren Behandlung außerhalb des Verfahrens, verlässt, wobei der Wärmeaustausch im Dephlegmator jeweils gegen nicht entgastes Kesselspeisewasser und/oder Kühlwasser erfolgt und wobei das beim Durchströmen des Gaskühlers aus dem Gas abgetrennte Kondensat sich im Sumpfraum des Gaskühlers sammelt, aus dem Sumpfraum ausgeleitet und zur Verwendung als Kesselspeisewasser der Entgasung zugeführt wird.

2. Verfahren nach Anspruch 1, **dadurch gekennzeichnet, dass** das Verfahren weiterhin einen Schritt zur Abkühlung des Synthesegase mit Umgebungsluft umfasst.

3. Verfahren nach Anspruch 1 oder 2, **dadurch gekennzeichnet, dass** das wasserstoffhaltige Synthesegas durch katalytische Dampfreformierung eines kohlenwasserstoffhaltigen Einsatzgases erzeugt wurde und dass vor der Abkühlung durch Wärmeaustausch mit entgastem Kesselspeisewasser eine Abkühlung durch Wärmeaustausch mit dem kohlenwasserstoffhaltigen Einsatzgas erfolgt.

## Claims

1. Process for cooling a hydrogen-containing synthesis gas which has been cooled by heat exchange with boiler feed water for conversion thereof into steam, wherein the resulting aqueous concentrate has been separated, wherein the process comprises the steps of:
a) cooling by heat exchange with degassed boiler feed water,
b) cooling by heat exchange with boiler feed water during degassing thereof,
c) cooling the gas and separating the condensate present in the gas using a gas cooler comprising a vertical container having one or more dephlegmators installed in the upper region of the container which are arranged in the container such that they cannot be bypassed by the gas flow, wherein the gas cooler further comprises a sump space arranged in the lower region of the container, an inflow opening in the container shell arranged between the sump space and the dephlegmator(s) for inflow of the gas stream, an opening arranged at the lowest point of the sump space for outflow of the liquid collected in the sump space and an opening for outflow of the gas stream arranged above the dephlegmator(s), and wherein the synthesis gas is introduced into the gas cooler, passes through the dephlegmator(s) and exits the gas cooler through the gas outflow opening for further treatment outside the process, wherein the heat exchange in the dephlegmator is in each case effected against undegassed boiler feed water and/or cooling water and wherein the condensate separated from the gas during passage through the gas cooler collects in the sump space of the gas cooler and is discharged from the sump space and sent for degassing for use as boiler feed water.

2. Process according to Claim 1, **characterized in that** the process further comprises a step for cooling the synthesis gas with ambient air.

3. Process according to Claim 1 or 2, **characterized in that** the hydrogen-containing synthesis gas has been produced by catalytic steam reforming of a hydrocarbon-containing input gas and **in that** the cooling by heat exchange with degassed boiler feed water is preceded by a cooling by heat exchange with the hydrocarbon-containing input gas.

## Revendications

1. Procédé de refroidissement d'un gaz de synthèse, contenant de l'hydrogène, qui a été refroidi par échange de chaleur avec de l'eau d'alimentation de chaudière pour la transformer en vapeur, le condensat aqueux résultant ayant été séparé, le procédé comprenant les étapes suivantes :
a) refroidissement par échange de chaleur avec de l'eau d'alimentation de chaudière dégazée,
b) refroidissement par échange de chaleur avec l'eau d'alimentation de chaudière lors du dégazage de celle-ci,
c) refroidissement du gaz et séparation du condensat dans le gaz au moyen d'un refroidisseur de gaz qui comprend un récipient vertical pourvu d'au moins un déflegmateur qui est installé dans la région supérieure du récipient et qui est disposé dans le récipient de manière que le flux de gaz ne puisse pas le contourner, le refroidisseur de gaz comportant en outre un espace de décantation ménagé dans la région inférieure du récipient, une ouverture d'entrée ménagée dans la chemise de réservoir entre l'espace de décantation et le ou les déflegmateurs et destinée à l'entrée du flux de gaz, une ouverture ménagée à l'emplacement le plus profond de l'espace de décantation et destinée à la sortie du liquide collecté dans l'espace de décantation et une ouverture ménagée au-dessus du ou des déflegmateurs et destinée à la sortie du flux de gaz, et le gaz de synthèse étant introduit dans le refroidisseur de gaz, s'écoulant à travers le ou les déflegmateurs et quittant le refroidisseur de gaz par l'ouverture de sortie de gaz pour un traitement supplémentaire extérieur au procédé, l'échange de chaleur dans le déflegmateur étant effectué contre de l'eau d'alimentation de chaudière non dégazée et/ou de l'eau de refroidissement et le condensat séparé du gaz de l'écoulement à travers le refroidisseur de gaz s'accumulant dans l'espace de décantation du refroidisseur de gaz, étant évacué de l'espace de décantation et amené à l'installation de dégazage pour être utilisé comme eau d'alimentation de chaudière.

2. Procédé selon la revendication 1, **caractérisé en ce que** le procédé comprend en outre une étape de refroidissement du gaz de synthèse avec de l'air ambiant.

3. Procédé selon la revendication 1 ou 2, **caractérisé en ce que** le gaz de synthèse contenant de l'hydrogène a été généré par reformage catalytique à la vapeur d'un gaz de charge contenant des hydrocarbures et **en ce que**, avant refroidissement par échange thermique avec de l'eau d'alimentation de chaudière dégazée, le refroidissement s'effectue par échange de chaleur avec le gaz d'alimentation contenant des hydrocarbures.
